# EUROPEAN PATENT APPLICATION

(11) **EP 4 336 468 A1**
(43) Date of publication of application: **13.03.2024**
(21) Application number: 23193899.4
(22) Date of filing: 29.08.2023
(51) Int. Cl.: G06V 20/58, G06V 20/56, G06V 20/64, G06V 20/40

(54) **PARAMETERIZATION METHOD FOR POINT CLOUD DATA**

(30) Priority: 06.09.2022 CN 202211085064
(71) Applicant: Beijing Tusen Zhitu Technology Co., Ltd., 10016 Beijing Beijing (CN)
(72) Inventor: LIU, Guangwei, Beiji, 100016 (CN); ZHOU, Henan, Beijing, 100016 (CN); WANG, Naiyan, Beijing, 100016 (CN)
(74) Representative: Murgitroyd & Company

(57) **Abstract**

The present invention discloses a parameterization method for point cloud data, a device and a storage medium. The method includes performing semantic segmentation on a plurality of three-dimensional data points of point cloud data in a spatial coordinate system to obtain at least one semantic object, the at least one semantic object corresponds to a plurality of three-dimensional semantic data points. The parameterization method for point cloud data further includes performing parametric fitting on the plurality of three-dimensional semantic data points to obtain spatial geometric parameters of the at least one semantic object corresponding to the plurality of three-dimensional semantic data points in the spatial coordinate system. By adopting the above technical solution, the automation of constructing a semantic map based on the point cloud data can be achieved.

## Description

The present application claims priority to Chinese Patent Application No. 202211085064.7, titled "PARAMETERIZATION METHOD FOR POINT CLOUD DATA AND MAP CONSTRUCTION METHOD", filed to China National Intellectual Property Administration on 6 September 2022.

### TECHNICAL FIELD

The present invention relates to a map construction method, and in particular to a parameterization method for point cloud data and a map construction method based on point cloud data.

### BACKGROUND

In the field of autonomous driving, a high-definition map may include semantic information. A high-definition semantic map generated by performing semantic segmentation processing on map data including, for example, road information such as a road mark, a lamp post, or the like, can be used in autonomous vehicle positioning and route planning. Therefore, a technique for constructing a high-definition semantic map on a large scale is very important for the development of the autonomous driving technology.

Generally, there are two main methods for constructing a semantic map to provide what's required for autonomous driving. The first method is a lidar-based method. Namely, after a point cloud map is obtained through sensor fusion, the semantic map is manually annotated according to the geometric structures and the reflection intensity of various types of semantic elements in the point cloud map. The second method is a camera-based method. Namely, semantic elements are detected from the picture data acquired by the camera by means of semantic segmentation. And then, three-dimensional information of semantic elements of each frame is estimated by using information such as the installation height of the camera, and semantic observations of each frame are fused by using camera pose information obtained by multi-sensor fusion, thereby constructing a global semantic map. In the above method, although the manual-based method for labeling the point cloud data acquired by the lidar can meet the high-definition requirement, the manual method is low in efficiency and high in cost, which is not beneficial to large-scale map construction. In addition, although the automatic construction of the semantic map can be achieved based on the scheme of performing semantic segmentation on the picture data acquired by the camera, the semantic map obtained by estimating the picture data and the pose information has relatively large error and does not meet the high-definition requirement.

Therefore, how to automatically construct a high-definition semantic map so as to meet both the requirements of high-definition and high-efficiency construction is a technical problem to be solved urgently for those skilled in the art.

### SUMMARY

The embodiments of the present invention provide a parameterization method and apparatus for point cloud data, a device and a storage medium, which can achieve the automation of constructing a semantic map based on the point cloud data in the process of map construction and increase the efficiency of constructing a high-definition semantic map.

The map construction method and apparatus, the device and the storage medium provided in the embodiments of the present invention can achieve the automation of constructing a semantic map based on the point cloud data and increase the efficiency of constructing a high-definition semantic map.

In a first aspect, an embodiment of the present invention provides a parameterization method for point cloud data, which comprises:
performing semantic segmentation on a plurality of three-dimensional data points of point cloud data in a spatial coordinate system to obtain at least one semantic object, wherein the at least one semantic object corresponds to a plurality of three-dimensional semantic data points; and
performing parametric fitting on the plurality of three-dimensional semantic data points to obtain spatial geometric parameters of the at least one semantic object corresponding to the plurality of three-dimensional semantic data points in the spatial coordinate system.

In a second aspect, an embodiment of the present invention provides a parameterization apparatus for point cloud data, which comprises:
a semantic segmentation module, configured for performing semantic segmentation on a plurality of three-dimensional data points of point cloud data in a spatial coordinate system to obtain at least one semantic object, wherein the at least one semantic object corresponds to a plurality of three-dimensional semantic data points; and
a parametric fitting module, configured for performing parametric fitting on the plurality of three-dimensional semantic data points to obtain spatial geometric parameters of the at least one semantic object corresponding to the plurality of three-dimensional semantic data points in the spatial coordinate system.

In a third aspect, an embodiment of the present invention provides a map construction method, which comprises:
constructing, according to sensor data, a point cloud map, wherein the point cloud map comprises point cloud data in a spatial coordinate system;
performing semantic segmentation on a plurality of three-dimensional data points of point cloud data in a spatial coordinate system to obtain at least one semantic object, wherein the at least one semantic object corresponds to a plurality of three-dimensional semantic data points;
performing parametric fitting on the plurality of three-dimensional semantic data points to obtain spatial geometric parameters of the at least one semantic object corresponding to the plurality of three-dimensional semantic data points in the spatial coordinate system; and
constructing, according to the spatial geometric parameters of the at least one semantic object, a semantic map.

In a fourth aspect, an embodiment of the present invention provides a map construction apparatus, which comprises:
a point cloud map construction module, configured for constructing, according to sensor data, a point cloud map, wherein the point cloud map comprises point cloud data in a spatial coordinate system;
a semantic segmentation module, configured for performing semantic segmentation on a plurality of three-dimensional data points of point cloud data in a spatial coordinate system to obtain at least one semantic object, wherein the at least one semantic object corresponds to a plurality of three-dimensional semantic data points;
a parametric fitting module, configured for performing parametric fitting on the plurality of three-dimensional semantic data points to obtain spatial geometric parameters of the at least one semantic object corresponding to the plurality of three-dimensional semantic data points in the spatial coordinate system; and
a semantic map construction module, configured for constructing, according to the spatial geometric parameters of the at least one semantic object, a semantic map.

In a fifth aspect, an embodiment of the present invention provides a computer device, which comprises a memory, a processor, and a computer program stored on the memory and executable on the processor, wherein the processor, when executing the computer program, implements the parameterization method for point cloud data according to the embodiment of the present invention.

In a sixth aspect, an embodiment of the present invention provides a computer device, which comprises a memory, a processor, and a computer program stored on the memory and executable on the processor, wherein the processor, when executing the computer program, implements the map construction method according to the embodiment of the present invention.

In a seventh aspect, an embodiment of the present invention provides a computer-readable storage medium, having a computer program stored thereon, wherein the program, when executed by a processor, causes the computer device to implement the parameterization method for point cloud data according to the embodiment of the present invention.

In an eighth aspect, an embodiment of the present invention provides a computer-readable storage medium, having a computer program stored thereon, wherein the program, when executed by a processor, causes the computer device to implement the map construction method according to the embodiment of the present invention.

Based on the above disclosure, since the semantic segmentation is performed on the plurality of three-dimensional data points of the point cloud data, a plurality of three-dimensional semantic data points corresponding to the at least one semantic object can be obtained. In addition, parametric fitting is performed on the three-dimensional semantic data points to obtain spatial geometric parameters of the semantic object corresponding to the three-dimensional semantic data points in the spatial coordinate system, thereby achieving the parametric fitting of the semantic object. The spatial geometric parameters can be configured to construct a semantic vector map so as to further construct a semantic map. Therefore, in the parameterization scheme for the point cloud data and the map construction scheme, the semantic map based on the point cloud data can be automatically constructed in the process of map construction, thereby increasing the efficiency of constructing a high-definition semantic map.

### BRIEF DESCRIPTION OF THE DRAWINGS

The accompanying drawings illustrate the exemplary embodiments and constitute a part of the specification, and, together with the text description of the specification, are provided to illustrate the exemplary implementations of the embodiments. It is obvious that the accompanying drawings described below are only some embodiments of the present invention. For one of ordinary skilled in the art, other accompanying drawings can be derived from the accompanying drawings without creative effort. Throughout the accompanying drawings, identical reference numerals designate similar, but not necessarily identical, elements.
FIG. 1 is a schematic diagram showing steps of a parameterization method for point cloud data according to an embodiment of the present invention;
FIG. 2 is a schematic diagram showing detailed steps of the parameterization method for point cloud data according to the embodiment of the present invention;
FIG. 3 is a schematic diagram showing steps of a map construction method according to an embodiment of the present invention;
FIG. 4 is a schematic flowchart showing a map construction process according to an embodiment of the present invention;
FIG. 5 is a picture of a mapping scene of the map construction method according to the embodiment of the present invention;
FIG. 6 is a schematic diagram of a sub-map comprising point cloud data in the process of map construction according to an embodiment of the present invention;
FIG. 7 is a schematic diagram of the determination of spatial geometric parameters of the ground according to an embodiment of the present invention;
FIG. 8 is an enlarged schematic diagram of a two-dimensional grid 220 of FIG. 7;
FIG. 9 is a schematic diagram of the determination of spatial geometric parameters of a road mark according to an embodiment of the present invention;
FIG. 10 is a schematic diagram of the determination of spatial geometric parameters of a road sign according to an embodiment of the present invention;
FIG. 11 is a schematic diagram of the determination of spatial geometric parameters of a lamp post according to an embodiment of the present invention;
FIG. 12 is a semantic vector map constructed by the map construction method according to an embodiment of the present invention;
FIG. 13 is a schematic diagram showing the topological connection between spatial geometric parameters corresponding to a plurality of road marks according to an embodiment of the present invention;
FIG. 14 is a structural block diagram of a parameterization apparatus for point cloud data according to an embodiment of the present invention;
FIG. 15 is a structural block diagram of a map construction apparatus according to an embodiment of the present invention; and
FIG. 16 is a structural block diagram of a computer device according to an embodiment of the present invention.

### DETAILED DESCRIPTION

In order to enable those skilled in the art to better understand the technical solutions of the present invention, the technical solutions in the embodiments of the present invention will be clearly and completely described below with reference to the drawings in the embodiments of the present invention. It is obvious that the described embodiments are only part of the embodiments of the present invention rather than all of the embodiments. All other embodiments obtained by those skilled in the art without making any creative effort based on the embodiments of the present invention shall fall within the protection scope of the present invention.

In the present disclosure, unless otherwise specified, the term ""a plurality of" means two or more. In the present disclosure, unless otherwise specified, the terms "first", "second", and the like are used for distinguishing between similar objects and are not intended to limit location relationships, timing relationships, or importance relationships thereof. It is to be understood that the terms used in this manner are interchangeable under appropriate circumstances so that the embodiments of the present invention described herein can be implemented in other manners in addition to those illustrated or described herein. Moreover, the terms "comprise" and "have" and any variations thereof are intended to cover non-exclusive inclusion. For example, a process, a method, a system, a product or a device comprising a series of steps or units is not necessarily limited to the explicitly listed steps or units, but may comprise other steps or units that are not explicitly listed or are inherent in the process, the method, the system, the product or the device.

In order to make the present application better understood by those skilled in the art, some technical terms appearing in the embodiments of the present application are explained below:

High-definition semantic map: a map describes road semantic information such as road marks, lamp posts, road signs and the like in the environment with centimeter-level definition, and can provide prior environmental information for the functions of real-time positioning, route planning, perception and the like of an autonomous vehicle.

Sub-map: a large-scale global map is divided into a plurality of local sub-maps according to a certain rule, in which effective and simple data processing can be achieved.

Frame: frames are measurement data received from one observation completed by the sensors. For example, one frame of data of the camera is a picture, and one frame of data of the lidar is a group of laser point clouds.

Keyframe: when a nonlinear optimization method is used to perform multi-sensor fusion, in order to reduce system computation, a keyframe is usually created when the distance change amount or the posture change amount exceeds a certain threshold, and the optimization is only conducted for the keyframe during optimization.

Road network: in a certain area, the road network is a road system composed of various roads that are interconnected and interwoven into a net distribution.

GNSS stands for Global Navigation Satellite System, which may comprise GPS or Beidou positioning system, etc.

GPS stands for Global Positioning System.

IMU stands for Inertial Measurement Unit, which is an apparatus for measuring the three-axis attitude angle (or angular velocity) and acceleration of an object.

Integrated navigation device: the integrated navigation device comprises, for example, a GNSS and an IMU.

In some embodiments of the present application, the term "vehicle" is to be interpreted broadly to include any moving object, including, for example, an aircraft, a watercraft, a spacecraft, an automobile, a truck, a van, a semi-trailer, a motorcycle, a golf cart, an off-road vehicle, a warehouse transportation vehicle or a farm vehicle, and a transportation vehicle that travels on rails, such as a tram or a train, and other rail vehicles. The "vehicle" in the present application may generally comprise: a power system, a sensor system, a control system, peripherals, and a computer system. In other embodiments, the vehicle may comprise more, fewer, or different systems.

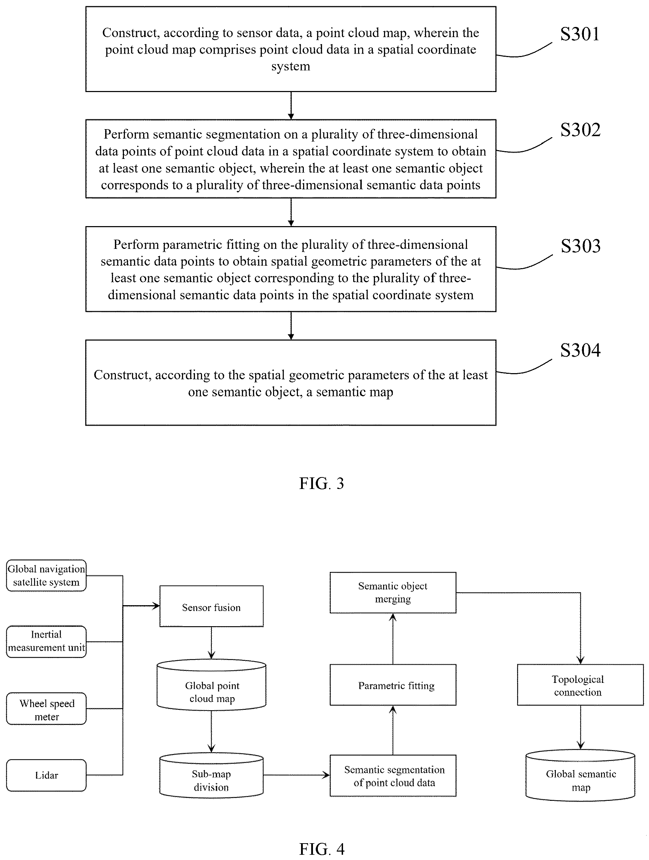

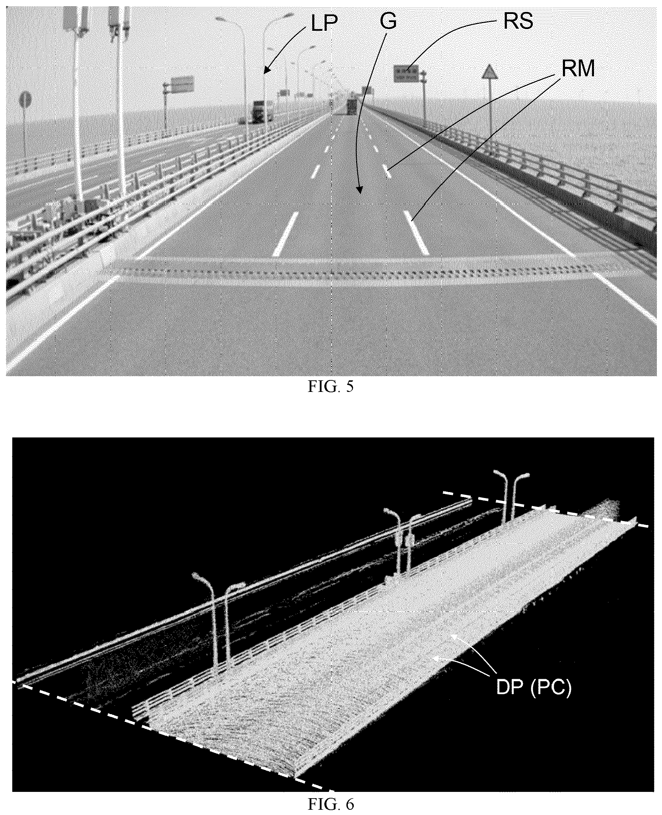

FIG. 4 is a schematic flowchart showing a map construction process according to an embodiment of the present invention, and FIG. 5 is a picture of a mapping scene of a map construction method according to an embodiment of the present invention. The following describes the process of map construction by taking the mapping scene of FIG. 5 as an example. The mapping scene of FIG. 5 is, for example, a scene of a road, which comprises a ground G, a road mark RM, a road sign RS, and a lamp post LP. The mapping scene may also comprise other objects of similar or dissimilar shape to those described above.

In the process of map construction, the map construction method and/or the parameterization method for point cloud data related to the embodiments of the present invention may be adopted.

Referring to FIG. 4, the map construction method comprises constructing a point cloud map according to sensor data. The point cloud map comprises point cloud data in a spatial coordinate system. The sensor data is collected by a vehicle configured with a plurality of sensors. The plurality of sensors include a lidar and one or more of the following sensors: a global navigation satellite system, an inertial measurement unit, a wheel speed meter, and an image acquisition apparatus. The plurality of sensors may also comprise one or more of an integrated navigation device, an inertial navigation system (INS), an accelerometer, a gyroscope, a millimeter wave radar, and an ultrasonic radar, and some of the sensors may also be integrated together. The image acquisition apparatus, for example a camera, may collect image data, while the lidar may collect point cloud data. In this embodiment, the vehicle travels along a road and collects sensor data on the way. Through calibration of sensors and fusion of sensor data, the location of point cloud data in each frame in a three-dimensional spatial coordinate system can be determined.

FIG. 6 is a schematic diagram of a sub-map comprising point cloud data in the process of map construction according to an embodiment of the present invention. The map construction method comprises fusing, according to the sensor data, point clouds of a plurality of frames to obtain a global point cloud map. Then, the global point cloud map is divided into a plurality of sub-maps. Each sub-map, for example, constructs a spatial coordinate system. The point cloud PC data is located in the spatial coordinate system and comprises a plurality of three-dimensional data points DP.

Two adjacent sub-maps have an overlapping area, and each sub-map is the point cloud map constructed according to the sensor data as described above. In this embodiment, the mapping scene is, for example, a road, the length of one sub-map may be 60 meters, and the length of the overlapping area of two adjacent sub-maps may be 10 meters. The length of the sub-map and the length of the overlapping area of two adjacent sub-maps may be set according to actual requirements. In this embodiment, the overlapping area is reserved, so that the fact that when semantic segmentation is performed subsequently to obtain semantic objects, the three-dimensional semantic data points DP of the same semantic object are distributed in two adjacent sub-maps, which affects the definition for map construction may be avoided.

In this embodiment, the plurality of sub-maps are divided along a traveling direction of the road. Two adjacent sub-maps include, for example, a first sub-map and a second sub-map. The second sub-map has, in an area outside the overlapping area, point cloud data collected while the vehicle is traveling in the road of the first sub-map. Each sub-map comprises, for example, point cloud data having depth information in excess of 80 meters. Taking the length of one sub-map as 60 meters as an example, the point cloud data at the far end collected when the vehicle travels in the road of the first sub-map may have depth information in excess of 80 meters, and the point cloud data falls within the second sub-map. Specifically, during the acquisition of point cloud data of each frame, the point cloud data at the far end is also reserved without being removed. After the point cloud data of all frames are overlapped, each sub-map, for example, the second sub-map, has point cloud data having far depth information. That is, each sub-map has point cloud data with close and far depth information, and thus has dense point clouds. The dense point clouds can effectively improve the definition of semantic segmentation when semantic segmentation is performed subsequently.

In addition, some tall objects, such as a lamp post LP, have to be sampled at a relatively distant place. Since each sub-map has point cloud data having far depth information, the point cloud data for the tall objects can be reserved, and the problem that the upper part of the lamp post LP cannot be sampled or information is lost can be avoided.

Referring to FIG. 4, after the sub-maps are divided, the point cloud data of all sub-map are subjected to semantic segmentation. In this embodiment, the map construction method and/or the parameterization method for point cloud data comprises performing semantic segmentation on a plurality of three-dimensional data points DP of point cloud PC data in a spatial coordinate system to obtain at least one semantic object, the at least one semantic object corresponding to a plurality of three-dimensional semantic data points. Specifically, after semantic segmentation, a semantic label for each three-dimensional data point DP is obtained, and a three-dimensional semantic data point is formed. By clustering the three-dimensional data points DP in the same semantic label, at least one set can be obtained, where each set corresponds to a semantic object. The clustering method is, for example, density-based spatial clustering of applications with noise (DBSCAN) or other methods, which is not limited in the present invention. Specifically, the at least one semantic object comprises, for example, the ground G, the road mark RM, the road sign RS, and the lamp post LP in FIG. 5.

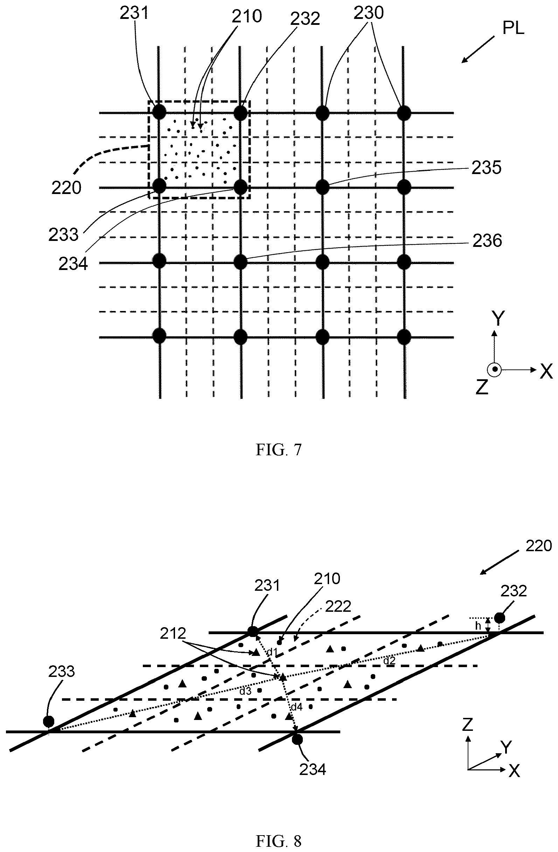

FIG. 7 is a schematic diagram of the determination of spatial geometric parameters of the ground according to an embodiment of the present invention. Reference is made to FIGs. 4 and 7. In this embodiment, after the semantic segmentation on the point cloud data is completed, the parametric fitting on the three-dimensional semantic data points is performed. The map construction method and/or the parameterization method for point cloud data comprises performing parametric fitting on the plurality of three-dimensional semantic data points to obtain spatial geometric parameters of the at least one semantic object corresponding to the plurality of three-dimensional semantic data points in the spatial coordinate system. The spatial coordinate system is constructed, for example, by a first axis, a second axis, and a third axis that are perpendicular to each other. The first axis extends in a first direction X, the second axis extends in a second direction Y, and the third axis extends in a third direction Z. That is, the first direction X, the second direction Y and the third direction Z are perpendicular to each other.

Specifically, referring to FIGs. 5 and 7, the plurality of three-dimensional semantic data points comprise a plurality of ground semantic data points 210 corresponding to the ground G. The above step of performing parametric fitting on the plurality of three-dimensional semantic data points to obtain spatial geometric parameters of the at least one semantic object corresponding to the plurality of three-dimensional semantic data points in the spatial coordinate system comprises: defining a plane PL in the spatial coordinate system (the plane PL is, for example, a plane formed parallel to the first direction X and the second direction Y); establishing a plurality of two-dimensional grids 220 on the plane PL, wherein the plurality of two-dimensional grids 220 define a plurality of grid regions (not shown), the plurality of grid regions comprising a space in a direction perpendicular to the plane PL (e.g., the third direction Z); and defining, according to a plurality of ground semantic data points 210 falling within the grid regions, a plurality of height values for a plurality of vertices 230 of the two-dimensional grid 220. Specifically, the spatial geometric parameters of the ground G comprise the plurality of vertices 230 of the plurality of the two-dimensional grid 220, and the plurality of height values are a plurality of numerical values of the plurality of vertices 230 in a direction perpendicular to the plane PL.

FIG. 8 is an enlarged schematic diagram of a two-dimensional grid 220 of FIG. 7. Referring to FIGs. 7 and 8, specifically, the above step of defining, according to the plurality of ground semantic data points 210 falling within the grid regions, a plurality of height values for a plurality of vertices of the two-dimensional grid 220 comprises: performing plane fitting on the plurality of ground semantic data points 210 falling within the grid regions to obtain a fitted plane of the two-dimensional grids 220; and determining, according to the fitted plane, the plurality of height values for the plurality of vertices 230. The above step of performing parametric fitting on the plurality of three-dimensional semantic data points to obtain spatial geometric parameters of the at least one semantic object corresponding to the plurality of three-dimensional semantic data points in the spatial coordinate system further comprises: dividing each two-dimensional grid 220 into a plurality of two-dimensional small grids 222, wherein the plurality of two-dimensional small grids 222 define a plurality of small grid regions (not shown) in a direction perpendicular to the plane PL; defining, according to a plurality of ground semantic data points 210 falling within each small grid region, ground semantic data points 210 representing each two-dimensional small grid 222 to obtain a plurality of sampled ground semantic data points 212 of the plurality of small grid regions; and constraining, according to the plurality of sampled ground semantic data points 212 falling within the grid regions, the plurality of height values for the plurality of vertices of the two-dimensional grids 220.

In this embodiment, the above plane fitting method is, for example, a random sample consensus (RANSAC) algorithm, or other fitting methods. In addition, each of the above sampled ground semantic data points 212 may be from one ground semantic data point 210 randomly selected within each two-dimensional small grid 222. However, in some embodiments, one ground semantic data point 210 may be selected within each two-dimensional small grid 222 as a sampled ground semantic data point 212 according to a specific algorithm, which is not limited in the present invention. Specifically, the two-dimensional grid 220 of FIG. 8 comprises four vertices, namely a vertex 231, a vertex 232, a vertex 233, and a vertex 234. The two-dimensional grids 220 are divided into nine two-dimensional small grids 222, and nine sampled ground semantic data points 212 may be selected. The nine sampled ground semantic data points 212 constrain the height value for the vertices 231, 232 (height value h as depicted in FIG. 8), and the height value for the vertices 233, 234 in the two-dimensional grid 220.

Specifically, each sampled ground semantic data point 212 constrains a height value for each vertex in the two-dimensional grid 220 according to a distance weight. The distance between each sampled ground semantic data point 212 within the grid region and the vertex is inversely related to the distance weight. This distance is defined in a direction parallel to the plane PL. The nine two-dimensional small grids 222 within the two-dimensional grid 220 may constrain the vertices 231, 232, 233 and 234 according to the distance weight. For example, the sampled ground semantic data point 212 of the central two-dimensional small grid 222 has a distance d1 from the vertex 231, a distance d2 from the vertex 232, a distance d3 from the vertex 233, and a distance d4 from the vertex 234. When the distance between the sampled ground semantic data point 212 and a vertex is relatively small, the sampled ground semantic data point 212 has a relatively large constraint on the vertex and is better able to influence the height value for the vertex. For example, the distance d2 is less than the distance d3, such that the sampled ground semantic data point 212 in the center has a greater influence on the height value h for the vertex 232 than on the height value for the vertex 233.

Referring to FIG. 7, in this embodiment, in a two-dimensional grid, other vertices adjacent to a vertex are defined as first adjacent vertices, and other vertices in other two-dimensional grids adjacent to the vertex are defined as second adjacent vertices. The height value for the vertex constrains the first adjacent vertex and the second adjacent vertex. For example, in the two-dimensional grid 220, the other vertices adjacent to the vertex 234 comprise the vertex 232 and the vertex 233, while the other vertices in other two-dimensional grids adjacent to the vertex 234 comprise the vertex 235 and the vertex 236. The vertex 232 and the vertex 233 are first adjacent vertices to the vertex 234, and the vertex 235 and the vertex 236 are second adjacent vertices to the vertex 234. The height value for the vertex 234 constrains the height values for the vertex 232, the vertex 233, the vertex 235, and the vertex 236. Specifically, vertices 230 in all the two-dimensional grids may be constrained to each other. The height value for each vertex 230 constrains the height values for four vertices adjacent to the vertex, as viewed from a plurality of disposed two-dimensional grids. That is, the height value for each vertex 230 is also constrained by the height values for the other adjacent four vertices. Based on the above, various methods can be used singly or in superposition to determine or adjust a plurality of height values for a plurality of vertices 230 of a plurality of two-dimensional grids, and the spatial geometric parameters of the ground G can be expressed by the vertices 230.

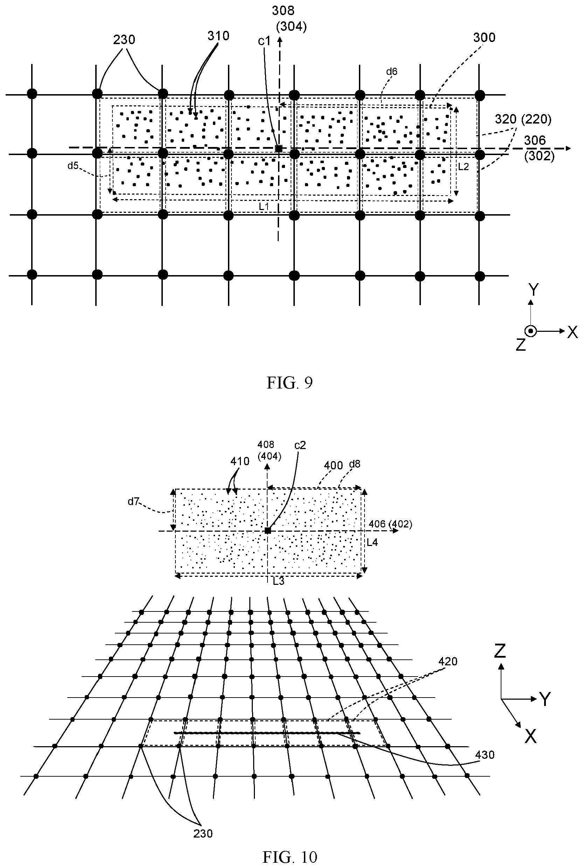

FIG. 9 is a schematic diagram of the determination of spatial geometric parameters of a road mark according to an embodiment of the present invention. Referring to FIG. 9, the plurality of three-dimensional semantic data points further comprise a plurality of road mark semantic data points 310 corresponding to the road mark RM. The above step of performing parametric fitting on the plurality of three-dimensional semantic data points to obtain spatial geometric parameters of the at least one semantic object corresponding to the plurality of three-dimensional semantic data points in the spatial coordinate system further comprises: determining a plurality of road mark-projected two-dimensional grids 320 from the plurality of two-dimensional grids 220, wherein the road mark-projected two-dimensional grids 320 encompass projections of the plurality of road mark semantic data points 310 on the plane PL; fitting a plurality of vertices 230 of the plurality of road mark-projected two-dimensional grid 320 to obtain a road mark-projected fitted plane (not shown); determining, according to the road mark-projected fitted plane and the plurality of road mark semantic data points 310, the spatial geometric parameters of the road mark RM, wherein the spatial geometric parameters of the road mark RM comprise a center point c1 of a road mark rectangle 300, a normal vector (not shown) of the road mark rectangle 300, a long side vector 302 of the road mark rectangle 300, a length L1 of the road mark rectangle 300 on the long side vector 302, and a length L2 of the road mark rectangle 300 on the short side vector 304. Specifically, the height values for a plurality of vertices 230 are already known. Here, a plurality of two-dimensional grids 220 encompassing a plurality of road mark semantic data points 310 are selected as a plurality of road mark-projected two-dimensional grids 320, and the spatial geometric parameters of the associated road mark RM are calculated according to the vertices 230 of the road mark-projected two-dimensional grids 320. In this way, the variation in the region of the ground G is reflected on the road mark RM.

In this embodiment, the step of determining, according to the road mark-projected fitted plane and the plurality of road mark semantic data points 310, the spatial geometric parameters of the road mark RM comprises: calculating a normal vector of the road mark-projected fitted plane as a normal vector of the road mark rectangle 300; and calculating a feature vector of the plurality of road mark semantic data points 310 as the long side vector 302, wherein the short side vector 304 is perpendicular to the normal vector of the road mark rectangle and is also perpendicular to the long side vector 302. In general, since the length-width ratio of a road mark in a real road is usually large, for example, the specific ratio is greater than 10, the center point c1 and the covariance matrix of the plurality of road mark semantic data points 310 are calculated, wherein the feature vector corresponding to the maximum feature value thereof may be taken as the long side vector 302, that is, the direction vector of the road mark RM.

In this embodiment, the step of determining, according to the road mark-projected fitted plane and the plurality of road mark semantic data points 310, the spatial geometric parameters of the road mark RM further comprises: calculating a predicted center point of the plurality of road mark semantic data points 310 as the center point c1 of the road mark rectangle 300; calculating a first spatial equation 306 and a second spatial equation 308 passing through the center point c1 of the road mark rectangle 300, wherein the first spatial equation 306 is parallel to the long side vector 302, and the second spatial equation 308 is parallel to the short side vector 304; calculating, according to a distance d5 from the plurality of road mark semantic data points 310 to the first spatial equation 306, the length L2 of the road mark rectangle 300 on the short side vector 304; and calculating, according to a distance d6 from the plurality of road mark semantic data points 310 to the second spatial equation 308, the length L1 of the road mark rectangle 300 on the long side vector 302. The length L1 on the long side vector 302 and the length L2 on the short side vector 304 of the road mark rectangle 300 may be estimated by different methods according to the data processing requirements. Specifically, the distance d5 and the distance d6 may be taken for each road mark semantic data point 310, and the mean value of these distances d5 and the mean value of these distances d6 may be calculated, respectively. The length L1 may be set to four times the mean value of these distances d6, and the length L2 may be set to four times the mean value of these distances d5. Therefore, noise generated by outliers can be excluded, and a range closer to the true road mark rectangle 300 can be obtained.

The road mark RM, which is described above in the form of a dashed line, can calculate the relevant parameters of the road mark rectangle 300 as the spatial geometric parameters. In some embodiments, to simplify storage and meanwhile facilitate the use of autonomous driving modules, for a road mark in the form of a long solid line, ordered discrete points may be selected for representation. Since the road mark rectangle parameters are already known, a plurality of points can be sampled at equal intervals on both sides with the center point of the rectangle as a reference, and these points are used to express the road mark in the form of a long solid line (spatial geometric parameters).

FIG. 10 is a schematic diagram of the determination of spatial geometric parameters of a road sign according to an embodiment of the present invention. Referring to FIG. 10, the plurality of three-dimensional semantic data points further comprise a plurality of road sign semantic data points 410 corresponding to the road sign RS. The above step of performing parametric fitting on the plurality of three-dimensional semantic data points to obtain spatial geometric parameters of the at least one semantic object corresponding to the plurality of three-dimensional semantic data points in the spatial coordinate system further comprises: determining a plurality of road sign-projected two-dimensional grids 420 from the plurality of two-dimensional grids 220, wherein the road sign-projected two-dimensional grids 420 encompass projections 430 of the plurality of road sign semantic data points 410 on the plane PL; fitting a plurality of vertices 230 of the plurality of road sign-projected two-dimensional grids 420 to obtain a road sign-projected fitted plane (not shown); determining, according to the road sign-projected fitted plane and the plurality of road sign semantic data points 410, the spatial geometric parameters of the road sign RS, wherein the spatial geometric parameters of the road sign RS comprise a center point c2 of a road sign rectangle 400, a normal vector (not shown) of the road sign rectangle 400, a first vector 402 of the road sign rectangle 400, a length L3 of the road sign rectangle 400 on the first vector 402, and a length L4 of the road sign rectangle 400 on the second vector 404.

In this embodiment, the step of determining, according to the road sign-projected fitted plane and the plurality of road sign semantic data points 410, the spatial geometric parameters of the road sign RS comprises: calculating a feature vector of the plurality of road sign semantic data points 410 as the normal vector of the road sign rectangle 400; and calculating the first vector 402, wherein the first vector 402 is parallel to the road sign-projected fitted plane, and the first vector 402 is perpendicular to the normal vector of the road sign rectangle 400, wherein the second vector 404 is perpendicular to the first vector 402 and also perpendicular to the normal vector of the road sign rectangle 400. Specifically, by calculating the center point c2 and the covariance matrix of the plurality of road sign semantic data points 410, the feature vector corresponding to the minimum feature value thereof can be used as the normal vector of the road sign rectangle 400. In addition, since the length and width of a real road sign are generally close, it is difficult to obtain the length and width of the road sign rectangle 400 by calculating the maximum feature value. Therefore, it is assumed in this embodiment that the first vector 402 is parallel to the road sign-projected fitted plane. That is, it is assumed that one side of the road sign RS is parallel to the ground below the road sign RS. Therefore, a first vector 402 and a second vector 404 may be determined.

In this embodiment, the step of determining, according to the road sign-projected fitted plane and the plurality of road sign semantic data points 410, the spatial geometric parameters of the road sign RS further comprises: calculating a predicted center point of the plurality of road sign semantic data points 410 as the center point c2 of the road sign rectangle 400; calculating a third spatial equation 406 and a fourth spatial equation 408 passing through the center point c2 of the road sign rectangle 400, wherein the third spatial equation 406 is parallel to the first vector 402, and the fourth spatial equation 408 is parallel to the second vector 404; calculating, according to a distance d7 from the plurality of road sign semantic data points 410 to the third spatial equation 406, the length L4 of the road sign rectangle 400 on the second vector 404; and calculating, according to a distance d8 from the plurality of road sign semantic data points 410 to the fourth spatial equation 408, the length L3 of the road sign rectangle 400 on the first vector 402. Specifically, the distance d7 and the distance d8 may be taken for each road sign semantic data point 410, and the mean value of these distances d7 and the mean value of these distances d8 may be calculated, respectively. The length L3 may be set to four times the mean value of these distances d8, and the length L4 may be set to four times the mean value of these distances d7. Therefore, noise generated by outliers can be excluded, and a range closer to the true road sign rectangle 400 can be obtained.

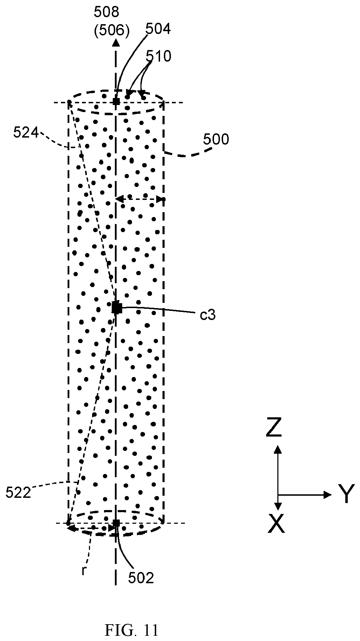

FIG. 11 is a schematic diagram of the determination of spatial geometric parameters of a lamp post according to an embodiment of the present invention. Referring to FIG. 11, the plurality of three-dimensional semantic data points comprise a plurality of lamp post semantic data points 510 corresponding to the lamp post LP, and the above step of performing parametric fitting on the plurality of three-dimensional semantic data points to obtain spatial geometric parameters of the at least one semantic object corresponding to the plurality of three-dimensional semantic data points in the spatial coordinate system comprises: determining, according to the plurality of lamp post semantic data points 510, the spatial geometric parameters of the lamp post LP, wherein the spatial geometric parameters of the lamp post LP comprise a starting point 502, an ending point 504 and a radius r of a lamp post cylinder 500.

In this embodiment, the above step of determining, according to the plurality of lamp post semantic data points 510, the spatial geometric parameters of the lamp post LP comprises: calculating a feature vector of the plurality of lamp post semantic data points 510 as an axis vector 506 of the lamp pole cylinder 500; calculating a predicted center point of the plurality of lamp post semantic data points 510 as the center point c3 of the lamp post cylinder 500; calculating a fifth spatial equation 508 passing through the center point c3 of the lamp post cylinder 500; and calculating, according to a distance from the plurality of lamp post semantic data points 510 to the fifth spatial equation 508, the radius r of the lamp post cylinder 500. In general, since the height of a real lamp post is much greater than the diameter thereof, the center point c3 and covariance matrix of the plurality of lamp post semantic data points 510 are calculated, wherein the feature vector corresponding to the maximum feature value thereof may be taken as the axis vector 506. In addition, the distance from each lamp post semantic data point 510 to the fifth spatial equation 508 may be calculated, and the mean value of these distances is then calculated. The radius r may be set to be the mean value. Therefore, noise generated by outliers can be excluded, and a range closer to the true lamp post cylinder 500 can be obtained.

In this embodiment, the above step of determining, according to the plurality of lamp post semantic data points 510, the spatial geometric parameters of the lamp post LP further comprises: defining a plurality of centripetal vectors of the plurality of lamp post semantic data points 510 to the center point c3 of the lamp post cylinder 500; and calculating, according to the plurality of centripetal vectors, the starting point 502 and the ending point 504 of the lamp post cylinder 500. Specifically, a centripetal vector, such as a centripetal vector 522 and a centripetal vector 524 shown in FIG. 11, may be generated for each lamp post semantic data point 510 to the center point c3. The starting point 502 and the ending point 504 may be estimated by calculating the maximum distance between the projections of the centripetal vectors to the fifth spatial equation 508.

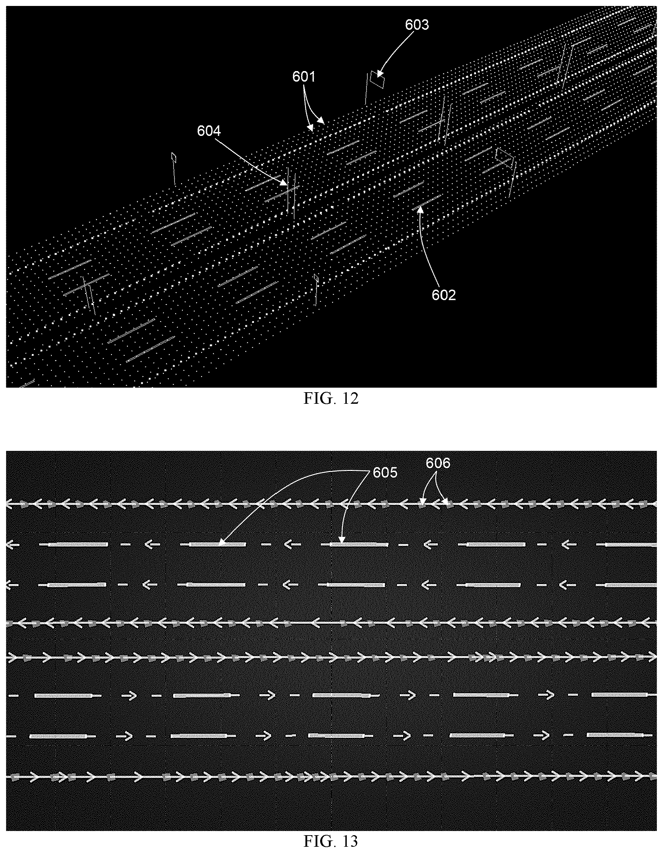

FIG. 12 is a semantic vector map constructed by the map construction method according to an embodiment of the present invention. Referring to FIGs. 5 and 12, FIG. 12 presents a visualization of spatial geometric parameters. It can be clearly seen that the spatial geometric parameters 601 of the ground G in the spatial coordinate system, the spatial geometric parameters 602 of the road mark RM in the spatial coordinate system, the spatial geometric parameters 603 of the road sign RS in the spatial coordinate system, and the spatial geometric parameters 604 of the lamp post LP in the spatial coordinate system are all effectively extracted.

Referring to FIG. 4, in this embodiment, after the parametric fitting on the three-dimensional semantic data points is completed, the semantic objects are merged. The map construction method comprises: fusing, according to the spatial geometric parameters, semantic objects located in the overlapping area of the two adjacent sub-maps; and eliminating the overlapping area to connect the two adjacent sub-maps. Specifically, since an overlapping area exists between adjacent sub-maps, the parameterization results of the semantic objects of the adjacent sub-maps need to be fused to eliminate duplicate semantic objects. Similarly, for sub-maps with closed-loop relationships, fusion is also needed to be performed to eliminate the deviation between observations at different moments. Because the timestamp, the pose and the parameterization results of the semantic objects of each sub-map are already known, for each semantic object in the sub-map, the parameterization result of whether a semantic object needing to be fused exists between adjacent or closed-loop sub-maps can be determined according to the geometric information.

Specifically, for a plurality of vertices 230 of the ground G to be fused, the associated vertices 230 may be directly averaged according to the Euclidean distance. For three types of semantic objects with definite geometric structures, namely a road mark RM, a road sign RS and a lamp post LP, a series of parameter ranges may be defined as a truth table according to the building standards of road elements in the real world so as to identify obvious abnormal values in a parameterization result. If both the parameterization results of the same semantic object in two sub-maps are in the normal range, the results are fitted to obtain new parameters. For example, the road mark RM in the form of a dashed line on a highway is about 6 meters long and about 0.15 meters wide. The lamp post LP and the road sign RS are both on the road surface, and the heights of the two are greater than zero. The length and width of the road sign RS are typically less than 3 meters. In different embodiments, a suitable parameter range may be made to merge the semantic objects, which is not limited in the present invention.

Referring to FIG. 4, in this embodiment, after the semantic objects are merged, a topological connection between a plurality of road marks is performed to obtain a global semantic map. The map construction method comprises a step of constructing, according to the spatial geometric parameters of the at least one semantic object, a semantic map, and the step comprises constructing, according to time sequence information of sensors and the spatial geometric parameters of the plurality of road marks, a topological connection between the plurality of road marks. Specifically, the autonomous driving modules for planning, perception and the like highly depend on the topological relationship of the road marks. As for the elements such as lamp posts and road signs, the location information is mainly concerned. The topological relationship is a directed connection relationship between road mark elements, and may be regarded as a directed connection graph. In this embodiment, the road marks RM in the form of dashed lines are parameterized as rectangles, and the road marks RM in the form of solid lines are parameterized as points. Therefore, the process of constructing the topological relationship is to calculate the connection relationship between the rectangles and the points.

Since road marks of a real road have clear geometric rules and time sequence information of each road mark is stored during data acquisition, the topological relationship between the road marks may be constructed according to the geometric relationship and the time sequence information. For example, the incremental construction may be performed in units of sub-maps. The mapping system maintains a global state variable for each road mark and updates the state variables in real time according to the parameterization results in the sub-maps. The road mark state variables comprise information such as a road mark number, a road mark orientation, and a road mark location. For road marks in each sub-map, firstly, the front-back relationship of each road mark element in the sub-map is determined according to the longitudinal coordinate. Then, by traversing each road mark element in the sub-map, which road mark the road mark element belongs to is determined according to the direction included angle between each road mark element and the state variable and the transverse distance from each element to the state variable, and the state variable is updated in real time by observing the road mark in the sub-map. For an associated road mark element which cannot be found in the current state variable, a global state variable can be newly established according to the observation, and meanwhile, a state variable which exceeds the threshold time and is not updated in distance may be screened out. In this embodiment, the connection relationship between global road marks can be constructed by sequentially traversing all the sub-maps.

FIG. 13 is a schematic diagram showing the topological connection between spatial geometric parameters corresponding to a plurality of road marks according to an embodiment of the present invention. Referring to FIG. 13, the spatial geometric parameters 605 represent a connection relationship between the road marks in the form of dashed lines. The spatial geometric parameters 606 represent a connection relationship between the road marks in the form of solid lines. In FIG. 13, arrows indicate the orientation of and the connection relationship between respective road mark elements. Through visualization, it can be seen that each road mark element is correctly connected.

In this embodiment, since the semantic segmentation is performed on the plurality of three-dimensional data points of the point cloud data, a plurality of three-dimensional semantic data points corresponding to at least one semantic object are obtained. In addition, parametric fitting is performed on the three-dimensional semantic data points to obtain spatial geometric parameters of the at least one semantic object corresponding to the three-dimensional semantic data points in the spatial coordinate system, thereby achieving the parametric fitting of the semantic objects. The spatial geometric parameters can be configured to construct a semantic vector map so as to further construct a semantic map. Therefore, the parameterization method for point cloud data and the map construction method in this embodiment can automatically construct a semantic map based on point cloud data in the map construction process, thereby increasing the efficiency of constructing a high-definition semantic map.

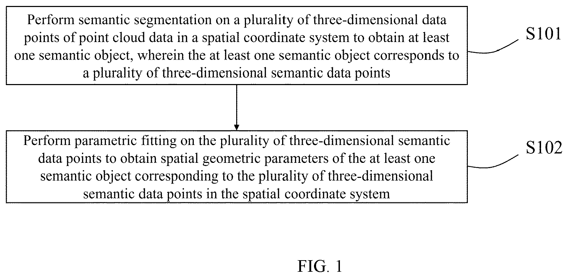

FIG. 1 is a schematic diagram showing a parameterization method for point cloud data according to other embodiments of the present invention. The method may be applied to an application scene of high-definition or non-high-definition map construction, and may be executed by a parameterization apparatus for point cloud data, wherein the apparatus may be implemented by software and/or hardware, and may be generally integrated in a computer device. The computer device herein may be integrated into a movable object, or may be externally connected to or in communication with the movable object. The detailed description or the expanded scheme of each step of FIG. 1 may refer to the related description of the embodiments of the present invention described above. Referring to FIG. 1, the parameterization method for point cloud data according to an embodiment of the present invention comprises:
Step S101: performing semantic segmentation on a plurality of three-dimensional data points of point cloud data in a spatial coordinate system to obtain at least one semantic object, wherein the at least one semantic object corresponds to a plurality of three-dimensional semantic data points.

After Step S101 is completed, the process proceeds to Step S102. Step S102: performing parametric fitting on the plurality of three-dimensional semantic data points to obtain spatial geometric parameters of the at least one semantic object corresponding to the plurality of three-dimensional semantic data points in the spatial coordinate system.

The parameterization method for point cloud data described in this embodiment can at least achieve the technical effect of the parameterization method for point cloud data as described above, and can automatically construct a semantic map based on the point cloud data in the map construction process, thereby increasing the efficiency of constructing a high-definition semantic map.

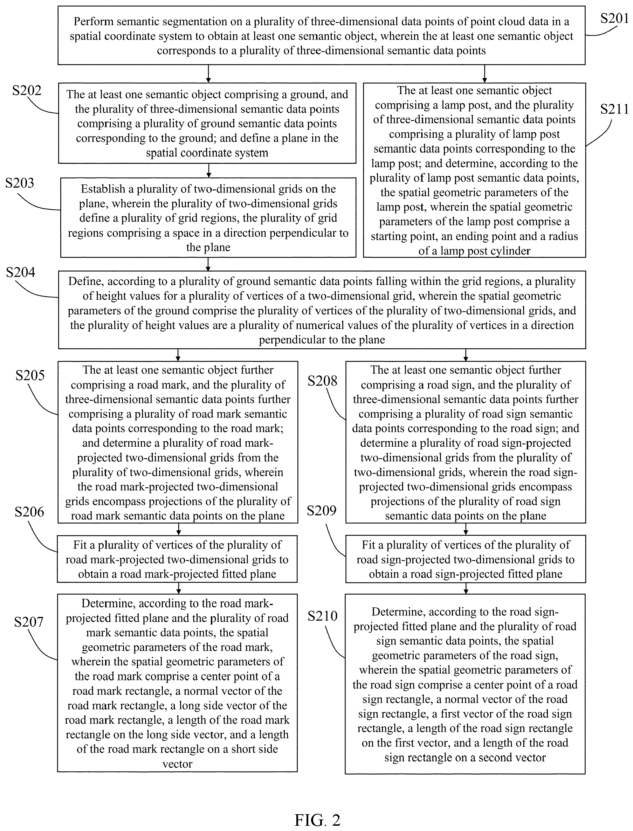

FIG. 2 is a schematic diagram showing the detailed steps of a parameterization method for point cloud data according to other embodiments of the present invention. The method may be applied to an application scene of high-definition or non-high-definition map construction, and may be executed by a parameterization apparatus for point cloud data, wherein the apparatus may be implemented by software and/or hardware, and may be generally integrated in a computer device. The computer device herein may be integrated into a movable object, or may be externally connected to or in communication with the movable object. The detailed description or the expanded scheme of each step of FIG. 2 may refer to the related description of the embodiments of the present invention described above. Referring to FIG. 2, the parameterization method for point cloud data according to an embodiment of the present invention comprises:

Step S201: performing semantic segmentation on a plurality of three-dimensional data points of point cloud data in a spatial coordinate system to obtain at least one semantic object, wherein the semantic objects correspond to a plurality of three-dimensional semantic data points.

After Step S201 is completed, the process may proceed to Step S202. Step S202: the at least one semantic object comprising a ground, and the plurality of three-dimensional semantic data points comprising a plurality of ground semantic data points corresponding to the ground; and defining a plane in the spatial coordinate system.

After Step S202 is completed, the process may proceed to Step S203. Step S203: establishing a plurality of two-dimensional grids on the plane, wherein the plurality of two-dimensional grids define a plurality of grid regions, the plurality of grid regions comprising a space in a direction perpendicular to the plane.

After Step S203 is completed, the process may proceed to Step S204. Step S204: defining, according to a plurality of ground semantic data points falling within the grid regions, a plurality of height values for a plurality of vertices of a two-dimensional grid, wherein the spatial geometric parameters of the ground comprise the plurality of vertices of the plurality of two-dimensional grids, and the plurality of height values are a plurality of numerical values of the plurality of vertices in a direction perpendicular to the plane.

After Step S204 is completed, the process may proceed to Step S205. Step S205: the at least one semantic object further comprising a road mark, and the plurality of three-dimensional semantic data points further comprising a plurality of road mark semantic data points corresponding to the road mark; and determining a plurality of road mark-projected two-dimensional grids from the plurality of two-dimensional grids, wherein the road mark-projected two-dimensional grids encompass projections of the plurality of road mark semantic data points on the plane.

After Step S205 is completed, the process may proceed to Step S206. Step S206: fitting a plurality of vertices of the plurality of road mark-projected two-dimensional grids to obtain a road mark-projected fitted plane.

After Step S206 is completed, the process may proceed to Step S207. Step S207: determining, according to the road mark-projected fitted plane and the plurality of road mark semantic data points, the spatial geometric parameters of the road mark, wherein the spatial geometric parameters of the road mark comprise a center point of a road mark rectangle, a normal vector of the road mark rectangle, a long side vector of the road mark rectangle, a length of the road mark rectangle on the long side vector, and a length of the road mark rectangle on a short side vector.

In addition, after Step S204 is completed, the process may also proceed to Step S208. Step S208: the at least one semantic object further comprising a road sign, and the plurality of three-dimensional semantic data points further comprising a plurality of road sign semantic data points corresponding to the road sign; and determining a plurality of road sign-projected two-dimensional grids from the plurality of two-dimensional grids, wherein the road sign-projected two-dimensional grids encompass projections of the plurality of road sign semantic data points on the plane.

After Step S208 is completed, the process may proceed to Step S209. Step S209: fitting a plurality of vertices of the plurality of road sign-projected two-dimensional grids to obtain a road sign-projected fitted plane.

After Step S209 is completed, the process may proceed to Step S210. Step S210: determining, according to the road sign-projected fitted plane and the plurality of road sign semantic data points, the spatial geometric parameters of the road sign, wherein the spatial geometric parameters of the road sign comprise a center point of a road sign rectangle, a normal vector of the road sign rectangle, a first vector of the road sign rectangle, a length of the road sign rectangle on the first vector, and a length of the road sign rectangle on a second vector.

In addition, after Step S201 is completed, the process may also proceed to Step S211. Step S211: the at least one semantic object comprising a lamp post, and the plurality of three-dimensional semantic data points comprising a plurality of lamp post semantic data points corresponding to the lamp post; and determining, according to the plurality of lamp post semantic data points, the spatial geometric parameters of the lamp post, wherein the spatial geometric parameters of the lamp post comprise a starting point, an ending point and a radius of a lamp post cylinder.

The parameterization method for point cloud data described in this embodiment can at least achieve the technical effect of the parameterization method for point cloud data as described above, and can automatically construct a semantic map based on the point cloud data in the map construction process, thereby increasing the efficiency of constructing a high-definition semantic map.

FIG. 3 is a schematic diagram showing steps of a map construction method according to an embodiment of the present invention. The method may be applied to an application scene of high-definition or non-high-definition map construction, and may be executed by a map construction apparatus, wherein the apparatus may be implemented by software and/or hardware, and may be generally integrated in a computer device. The computer device herein may be integrated into a movable object, or may be externally connected to or in communication with the movable object. The detailed description or the expanded scheme of each step of FIG. 3 may refer to the related description of the embodiments of the present invention described above. Referring to FIG. 3, a map construction method according to an embodiment of the present invention comprises:

Step S301: constructing, according to sensor data, a point cloud map, wherein the point cloud map comprises point cloud data in a spatial coordinate system.

After Step S301 is completed, the process may proceed to Step S302. Step S302: performing semantic segmentation on a plurality of three-dimensional data points of point cloud data in a spatial coordinate system to obtain at least one semantic object, wherein the at least one semantic object corresponds to a plurality of three-dimensional semantic data points.

After Step S302 is completed, the process may proceed to Step S303. Step S303: performing parametric fitting on the plurality of three-dimensional semantic data points to obtain spatial geometric parameters of the at least one semantic object corresponding to the plurality of three-dimensional semantic data points in the spatial coordinate system.

After Step S303 is completed, the process may proceed to Step S304. Step S304: constructing, according to the spatial geometric parameters of the at least one semantic object, a semantic map.

The map construction method described in this embodiment can at least achieve the technical effect of the map construction method described above, and can automatically construct a semantic map based on the point cloud data in the map construction process, thereby increasing the efficiency of constructing a high-definition semantic map.

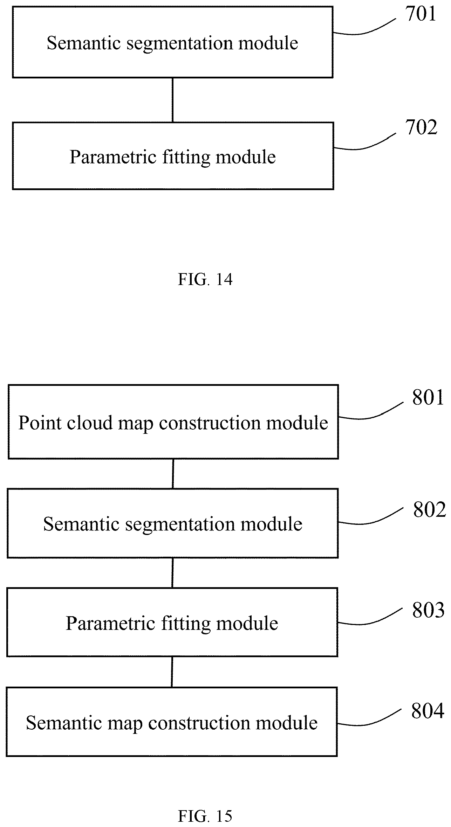

FIG. 14 is a structural block diagram of a parameterization apparatus for point cloud data according to an embodiment of the present invention. The apparatus may be implemented by software and/or hardware, may be generally integrated in a computer device, and may perform parameterization of point cloud data by executing the parameterization method for point cloud data. As shown in FIG. 14, the apparatus comprises:
a semantic segmentation module 701, configured for performing semantic segmentation on a plurality of three-dimensional data points of point cloud data in a spatial coordinate system to obtain at least one semantic object, wherein the at least one semantic object corresponds to a plurality of three-dimensional semantic data points; and
a parametric fitting module 702, configured for performing parametric fitting on the plurality of three-dimensional semantic data points to obtain spatial geometric parameters of the at least one semantic object corresponding to the plurality of three-dimensional semantic data points in the spatial coordinate system.

The parameterization apparatus for point cloud data according to the embodiment of the present invention can execute the parameterization method for point cloud data to parameterize the point cloud data, can at least achieve the technical effect of the parameterization method for point cloud data as described above, and can automatically construct a semantic map based on the point cloud data in the map construction process, thereby increasing the efficiency of constructing a high-definition semantic map.

FIG. 15 is a structural block diagram of a map construction apparatus according to an embodiment of the present invention. The apparatus may be implemented by software and/or hardware, may be generally integrated in a computer device, and may perform map construction by executing the map construction method. As shown in FIG. 15, the apparatus comprises:
a point cloud map construction module 801, configured for constructing, according to sensor data, a point cloud map, wherein the point cloud map comprises point cloud data in a spatial coordinate system;
a semantic segmentation module 802, configured for performing semantic segmentation on a plurality of three-dimensional data points of point cloud data in a spatial coordinate system to obtain at least one semantic object, wherein the at least one semantic object corresponds to a plurality of three-dimensional semantic data points;
a parametric fitting module 803, configured for performing parametric fitting on the plurality of three-dimensional semantic data points to obtain spatial geometric parameters of the at least one semantic object corresponding to the plurality of three-dimensional semantic data points in the spatial coordinate system; and
a semantic map construction module 804, configured for constructing, according to the spatial geometric parameters of the at least one semantic object, a semantic map.

The map construction apparatus according to the embodiment of the present invention can execute the map construction method to construct a map, can at least achieve the technical effect of the map construction method as described above, and can automatically construct a semantic map based on the point cloud data in the map construction process, thereby increasing the efficiency of constructing a high-definition semantic map.

Optionally, the point cloud map construction module 801 may be configured for fusing, according to the sensor data, point clouds of a plurality of frames to obtain a global point cloud map; and dividing the global point cloud map into a plurality of sub-maps, wherein two adjacent sub-maps have an overlapping area, and each sub-map is the point cloud map.

Optionally, the sensor data is collected by a vehicle configured with sensors and traveling along a road, and the plurality of sub-maps are divided along a traveling direction of the road, wherein the two adjacent sub-maps comprise a first sub-map and a second sub-map. The second sub-map has, in an area outside the overlapping area, point cloud data collected while the vehicle is traveling in the road of the first sub-map.

Optionally, each sub-map comprises point cloud data having depth information in excess of 80 meters.

Optionally, the sensor data is collected by a vehicle configured with a plurality of sensors. The plurality of sensors includes a lidar and one or more of the following sensors: a global navigation satellite system, an inertial measurement unit, a wheel speed meter, and an image acquisition apparatus.

Optionally, the semantic map construction module 804 may fuse, according to the spatial geometric parameters, semantic objects located in the overlapping area of the two adjacent sub-maps, and eliminate the overlapping area to connect the two adjacent sub-maps.

Optionally, the at least one semantic object comprises a plurality of road marks. The semantic map construction module 804 may be configured for constructing, according to time sequence information of sensors and the spatial geometric parameters of the plurality of road marks, a topological connection between the plurality of road marks.

Optionally, the at least one semantic object comprises a ground. The plurality of three-dimensional semantic data points comprise a plurality of ground semantic data points corresponding to the ground. The parametric fitting module 702 and/or the parametric fitting module 803 may be configured for defining a plane in a spatial coordinate system; establishing a plurality of two-dimensional grids on the plane, wherein the plurality of two-dimensional grids define a plurality of grid regions, the plurality of grid regions comprising a space in a direction perpendicular to the plane; and defining, according to a plurality of ground semantic data points falling within the grid regions, a plurality of height values for a plurality of vertices of a two-dimensional grid, wherein the spatial geometric parameters of the ground comprise the plurality of vertices of the plurality of two-dimensional grids, and the plurality of height values are a plurality of numerical values of the plurality of vertices in a direction perpendicular to the plane.

Optionally, the parametric fitting module 702 and/or the parametric fitting module 803 may be configured for performing plane fitting on the plurality of ground semantic data points falling within the grid regions to obtain a fitted plane of the two-dimensional grid; and determining, according to the fitted plane, the plurality of height values for the plurality **of** vertices.

Optionally, the parametric fitting module 702 and/or the parametric fitting module 803 may be configured for dividing each two-dimensional grid into a plurality of two-dimensional small grids, wherein the plurality of two-dimensional small grids define a plurality of small grid regions in a direction perpendicular to the plane; defining, according to the plurality of ground semantic data points falling within each small grid region, ground semantic data points representing each two-dimensional small grid to obtain a plurality of sampled ground semantic data points of the plurality of small grid regions; and constraining, according to the plurality of sampled ground semantic data points falling within the grid regions, the plurality of height values for the plurality of vertices of the two-dimensional grid.

Optionally, each sampled ground semantic data point constrains a height value for each vertex in the two-dimensional grids according to a distance weight, wherein a distance between each sampled ground semantic data point within the grid regions and each vertex is inversely related to the distance weight, the distance being defined in a direction parallel to the plane.

Optionally, in a two-dimensional grid, other vertices adjacent to a vertex are defined as first adjacent vertices, and other vertices in other two-dimensional grids adjacent to the vertex are defined as second adjacent vertices, wherein a height value for the vertex constrains the first adjacent vertices and the second adjacent vertices.

Optionally, the at least one semantic object further comprises a road mark, and the plurality of three-dimensional semantic data points further comprise a plurality of road mark semantic data points corresponding to the road mark. The parametric fitting module 702 and/or the parametric fitting module 803 may be configured for determining a plurality of road mark-projected two-dimensional grids from the plurality of two-dimensional grids, wherein the road mark-projected two-dimensional grids encompass projections of the plurality of road mark semantic data points on the plane; fitting a plurality of vertices of the plurality of road mark-projected two-dimensional grids to obtain a road mark-projected fitted plane; and determining, according to the road mark-projected fitted plane and the plurality of road mark semantic data points, the spatial geometric parameters of the road mark, wherein the spatial geometric parameters of the road mark comprise a center point of a road mark rectangle, a normal vector of the road mark rectangle, a long side vector of the road mark rectangle, a length of the road mark rectangle on the long side vector, and a length of the road mark rectangle on a short side vector.

Optionally, the parametric fitting module 702 and/or the parametric fitting module 803 may be configured for calculating a normal vector of the road mark-projected fitted plane as a normal vector of the road mark rectangle; and calculating a feature vector of the plurality of road mark semantic data points as the long side vector, wherein the short side vector is perpendicular to the normal vector of the road mark rectangle and is also perpendicular to the long side vector.

Optionally, the parametric fitting module 702 and/or the parametric fitting module 803 may be configured for calculating a predicted center point of the plurality of road mark semantic data points as the center point of the road mark rectangle; calculating a first spatial equation and a second spatial equation passing through the center point of the road mark rectangle, wherein the first spatial equation is parallel to the long side vector, and the second spatial equation is parallel to the short side vector; calculating, according to a distance from the plurality of road mark semantic data points to the first spatial equation, the length of the road mark rectangle on the short side vector; and calculating, according to a distance from the plurality of road mark semantic data points to the second spatial equation, the length of the road mark rectangle on the long side vector.

Optionally, the at least one semantic object further comprises a road sign, and the plurality of three-dimensional semantic data points further comprise a plurality of road sign semantic data points corresponding to the road sign. The parametric fitting module 702 and/or the parametric fitting module 803 may be configured for determining a plurality of road sign-projected two-dimensional grids from the plurality of two-dimensional grids, wherein the road sign-proj ected two-dimensional grids encompass projections of the plurality of road sign semantic data points on the plane; fitting a plurality of vertices of the plurality of road sign-projected two-dimensional grids to obtain a road sign-projected fitted plane; and determining, according to the road sign-projected fitted plane and the plurality of road sign semantic data points, the spatial geometric parameters of the road sign, wherein the spatial geometric parameters of the road sign comprise a center point of a road sign rectangle, a normal vector of the road sign rectangle, a first vector of the road sign rectangle, a length of the road sign rectangle on the first vector, and a length of the road sign rectangle on a second vector.

Optionally, the parametric fitting module 702 and/or the parametric fitting module 803 may be configured for calculating a feature vector of the plurality of road sign semantic data points as the normal vector of the road sign rectangle; and calculating the first vector, wherein the first vector is parallel to the road sign-projected fitted plane, and the first vector is perpendicular to the normal vector of the road sign rectangle, wherein the second vector is perpendicular to the first vector and also perpendicular to the normal vector of the road sign rectangle.

Optionally, the parametric fitting module 702 and/or the parametric fitting module 803 may be configured for calculating a predicted center point of the plurality of road sign semantic data points as the center point of the road sign rectangle; calculating a third spatial equation and a fourth spatial equation passing through the center point of the road sign rectangle, wherein the third spatial equation is parallel to the first vector, and the fourth spatial equation is parallel to the second vector; calculating, according to a distance from the plurality of road sign semantic data points to the third spatial equation, the length of the road sign rectangle on the second vector; and calculating, according to a distance from the plurality of road sign semantic data points to the fourth spatial equation, the length of the road sign rectangle on the first vector.

Optionally, the at least one semantic object comprises a lamp post, and the plurality of three-dimensional semantic data points comprise a plurality of lamp post semantic data points corresponding to the lamp post. The parametric fitting module 702 and/or the parametric fitting module 803 may be configured for determining, according to the plurality of lamp post semantic data points, the spatial geometric parameters of the lamp post, wherein the spatial geometric parameters of the lamp post comprise a starting point, an ending point and a radius of a lamp post cylinder.

Optionally, the parametric fitting module 702 and/or the parametric fitting module 803 may be configured for calculating a feature vector of the plurality of lamp post semantic data points as an axis vector of the lamp post cylinder; calculating a predicted center point of the plurality of lamp post semantic data points as the center point of the lamp post cylinder; calculating a fifth spatial equation passing through the center point of the lamp post cylinder; and calculating, according to a distance from the plurality of lamp post semantic data points to the fifth spatial equation, the radius of the lamp post cylinder.

Optionally, the parametric fitting module 702 and/or the parametric fitting module 803 may be configured for defining a plurality of centripetal vectors of the plurality of lamp post semantic data points to the center point of the lamp post cylinder; and calculating, according to the plurality of centripetal vectors, the starting point and the ending point of the lamp post cylinder.

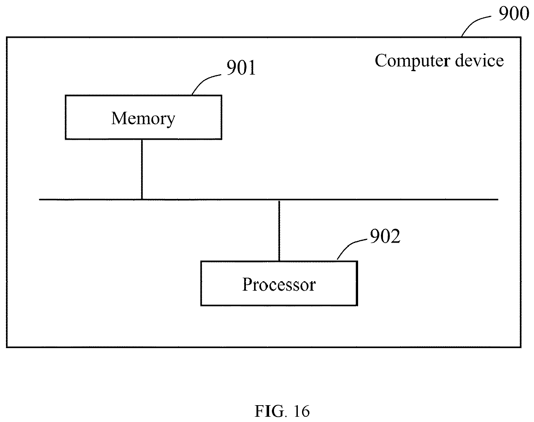

An embodiment of the present invention provides a computer device, into which the parameterization apparatus for point cloud data and/or the map construction apparatus according to the embodiments of the present invention can be integrated. FIG. 16 is a structural block diagram of a computer device according to an embodiment of the present invention. The computer device 900 may comprise: a memory 901, a processor 902, and a computer program stored on the memory 901 and executable on the processor, wherein the processor 902, when executing the computer program, implements the parameterization method for point cloud data and/or the map construction method according to an embodiment of the present invention. The computer device herein may be integrated into a movable object, and in this case, the computer device may also be considered as the movable object itself, such as a vehicle; the computer device may also be externally connected to or in communication with the movable object.

The computer device according to the embodiment of the present invention can achieve the parameterization method for point cloud data and/or the map construction method according to the embodiment of the present invention, can at least achieve the technical effect of the parameterization method for point cloud data and/or the map construction method as described above, and can automatically construct a semantic map based on the point cloud data in the map construction process, thereby increasing the efficiency of constructing a high-definition semantic map.

An embodiment of the present invention further provides a storage medium containing a computer executable instruction, wherein the computer executable instruction, when executed by a computer processor, causes the computer device to implement the parameterization method for point cloud data and/or the map construction method according to the embodiment of the present invention.

Storage medium-any of various types of memory devices or storage devices. The term "storage medium" is intended to include: a mounting medium such as CD-ROM, a floppy disk, or a tape apparatus; a computer system memory or a random access memory such as DRAM, DDRRAM, SRAM, EDORAM, Rambus RAM, etc.; a non-volatile memory, such as a flash memory, a magnetic medium (e.g., a hard disk or an optical storage); a register or other similar types of memory elements, etc. The storage medium may also include other types of memory or combinations thereof. In addition, the storage medium may be located in a first computer system in which the program is executed, or may be located in a different second computer system connected to the first computer system via a network (such as the Internet). The second computer system may provide a program instruction to the first computer for execution. The term "storage medium" may include two or more storage media that may reside in different locations, such as in different computer systems that are connected via a network. The storage medium may store a program instruction (e.g., embodied as a computer program) that is executable by one or more processors.

The parameterization apparatus for point cloud data, the device and the storage medium according to the embodiments as described above can execute the parameterization method for point cloud data according to any embodiment of the present invention, and have corresponding functional modules and beneficial effects for executing the method. For technical details not described in detail in the above embodiments, reference may be made to the parameterization method for point cloud data according to any embodiment of the present invention.

The map construction apparatus, the device and the storage medium according to the above embodiments can execute the map construction method according to any embodiment of the present invention, and have corresponding functional modules and beneficial effects for executing the method. For technical details that are not described in detail in the above embodiments, reference may be made to the map construction method according to any embodiment of the present invention.

Although exemplary embodiments or examples of the present disclosure have been described with reference to the accompanying drawings, it should be understood that the above exemplary discussion is not intended to be exhaustive or to limit the present invention to the precise forms disclosed. Many modifications and variations are possible in view of the above teachings. Therefore, the disclosed subject matter should not be limited to any single embodiment or example described herein, but rather should be construed in breadth and scope in accordance with the appended claims.

## Claims

1. A parameterization method for point cloud data, comprising:
performing semantic segmentation on a plurality of three-dimensional data points of point cloud data in a spatial coordinate system to obtain at least one semantic object, wherein the at least one semantic object corresponds to a plurality of three-dimensional semantic data points; and
performing parametric fitting on the plurality of three-dimensional semantic data points to obtain spatial geometric parameters of the at least one semantic object corresponding to the plurality of three-dimensional semantic data points in the spatial coordinate system.

2. The method according to claim 1, wherein the at least one semantic object comprises a ground, the plurality of three-dimensional semantic data points comprise a plurality of ground semantic data points corresponding to the ground, and performing parametric fitting on the plurality of three-dimensional semantic data points to obtain the spatial geometric parameters of the at least one semantic object corresponding to the plurality of three-dimensional semantic data points in the spatial coordinate system comprises:
defining a plane in the spatial coordinate system;
establishing a plurality of two-dimensional grids on the plane, wherein the plurality of two-dimensional grids define a plurality of grid regions, the plurality of grid regions comprising a space in a direction perpendicular to the plane; and
defining, according to a plurality of ground semantic data points falling within the grid regions, a plurality of height values for a plurality of vertices of a two-dimensional grid, wherein the spatial geometric parameters of the ground comprise the plurality of vertices of the plurality of two-dimensional grids, and the plurality of height values are a plurality of numerical values of the plurality of vertices in a direction perpendicular to the plane.

3. The method according to claim 2, wherein defining, according to the plurality of ground semantic data points falling within the grid regions, the plurality of height values for the plurality of vertices of the two-dimensional grid comprises:
performing plane fitting on the plurality of ground semantic data points falling within the grid regions to obtain a fitted plane of the two-dimensional grid; and
determining, according to the fitted plane, the plurality of height values for the plurality of vertices.

4. The method according to claim 2, wherein performing parametric fitting on the plurality of three-dimensional semantic data points to obtain the spatial geometric parameters of the at least one semantic object corresponding to the plurality of three-dimensional semantic data points in the spatial coordinate system further comprises:
dividing each two-dimensional grid into a plurality of two-dimensional small grids, wherein the plurality of two-dimensional small grids define a plurality of small grid regions in a direction perpendicular to the plane;
defining, according to a plurality of ground semantic data points falling within each small grid region, ground semantic data points representing each two-dimensional small grid to obtain a plurality of sampled ground semantic data points of the plurality of small grid regions; and
constraining, according to the plurality of sampled ground semantic data points falling within the grid regions, the plurality of height values for the plurality of vertices of the two-dimensional grid.

5. The method according to claim 4, wherein each sampled ground semantic data point constrains a height value for each vertex in the two-dimensional grid according to a distance weight, wherein a distance between each sampled ground semantic data point within the grid regions and each vertex is inversely related to the distance weight, the distance being defined in a direction parallel to the plane.

6. The method according to claim 2, wherein in one said two-dimensional grid, other vertices adjacent to one said vertex are defined as first adjacent vertices, and other vertices in other said two-dimensional grids adjacent to the vertex are defined as second adjacent vertices, wherein a height value for the vertex constrains the first adjacent vertices and the second adjacent vertices.

7. The method according to claim 2, wherein the at least one semantic object further comprises a road mark, the plurality of three-dimensional semantic data points further comprise a plurality of road mark semantic data points corresponding to the road mark, and performing parametric fitting on the plurality of three-dimensional semantic data points to obtain the spatial geometric parameters of the at least one semantic object corresponding to the plurality of three-dimensional semantic data points in the spatial coordinate system further comprises:
determining a plurality of road mark-projected two-dimensional grids from the plurality of two-dimensional grids, wherein the road mark-projected two-dimensional grids encompass projections of the plurality of road mark semantic data points on the plane;
fitting a plurality of vertices of the plurality of road mark-projected two-dimensional grids to obtain a road mark-projected fitted plane; and
determining, according to the road mark-projected fitted plane and the plurality of road mark semantic data points, the spatial geometric parameters of the road mark, wherein the spatial geometric parameters of the road mark comprise a center point of a road mark rectangle, a normal vector of the road mark rectangle, a long side vector of the road mark rectangle, a length of the road mark rectangle on the long side vector, and a length of the road mark rectangle on a short side vector.

8. The method according to claim 7, wherein determining, according to the road mark-projected fitted plane and the plurality of road mark semantic data points, the spatial geometric parameters of the road mark comprises:
calculating a normal vector of the road mark-projected fitted plane as a normal vector of the road mark rectangle; and
calculating a feature vector of the plurality of road mark semantic data points as the long side vector, wherein the short side vector is perpendicular to the normal vector of the road mark rectangle and is also perpendicular to the long side vector.

9. The method according to claim 8, wherein determining, according to the road mark-projected fitted plane and the plurality of road mark semantic data points, the spatial geometric parameters of the road mark further comprises:
calculating a predicted center point of the plurality of road mark semantic data points as the center point of the road mark rectangle;
calculating a first spatial equation and a second spatial equation passing through the center point of the road mark rectangle, wherein the first spatial equation is parallel to the long side vector, and the second spatial equation is parallel to the short side vector;
calculating, according to a distance from the plurality of road mark semantic data points to the first spatial equation, the length of the road mark rectangle on the short side vector; and
calculating, according to a distance from the plurality of road mark semantic data points to the second spatial equation, the length of the road mark rectangle on the long side vector.

10. The method according to claim 2, wherein the at least one semantic object further comprises a road sign, the plurality of three-dimensional semantic data points further comprise a plurality of road sign semantic data points corresponding to the road sign, and performing parametric fitting on the plurality of three-dimensional semantic data points to obtain the spatial geometric parameters of the at least one semantic object corresponding to the plurality of three-dimensional semantic data points in the spatial coordinate system further comprises:
determining a plurality of road sign-projected two-dimensional grids from the plurality of two-dimensional grids, wherein the road sign-projected two-dimensional grids encompass projections of the plurality of road sign semantic data points on the plane;
fitting a plurality of vertices of the plurality of road sign-projected two-dimensional grids to obtain a road sign-projected fitted plane; and
determining, according to the road sign-projected fitted plane and the plurality of road sign semantic data points, the spatial geometric parameters of the road sign, wherein the spatial geometric parameters of the road sign comprise a center point of a road sign rectangle, a normal vector of the road sign rectangle, a first vector of the road sign rectangle, a length of the road sign rectangle on the first vector, and a length of the road sign rectangle on a second vector.

11. The method according to claim 10, wherein determining, according to the road sign-projected fitted plane and the plurality of road sign semantic data points, the spatial geometric parameters of the road sign comprises:
calculating a feature vector of the plurality of road sign semantic data points as the normal vector of the road sign rectangle;
calculating the first vector, wherein the first vector is parallel to the road sign-projected fitted plane, and the first vector is perpendicular to the normal vector of the road sign rectangle, wherein the second vector is perpendicular to the first vector and also perpendicular to the normal vector of the road sign rectangle;
calculating a predicted center point of the plurality of road sign semantic data points as the center point of the road sign rectangle;
calculating a third spatial equation and a fourth spatial equation passing through the center point of the road sign rectangle, wherein the third spatial equation is parallel to the first vector, and the fourth spatial equation is parallel to the second vector;
calculating, according to a distance from the plurality of road sign semantic data points to the third spatial equation, the length of the road sign rectangle on the second vector; and
calculating, according to a distance from the plurality of road sign semantic data points to the fourth spatial equation, the length of the road sign rectangle on the first vector.

12. The method according to any one of claims 1-11, wherein the at least one semantic object comprises a lamp post, the plurality of three-dimensional semantic data points comprise a plurality of lamp post semantic data points corresponding to the lamp post, and performing parametric fitting on the plurality of three-dimensional semantic data points to obtain the spatial geometric parameters of the at least one semantic object corresponding to the plurality of three-dimensional semantic data points in the spatial coordinate system comprises:
determining, according to the plurality of lamp post semantic data points, the spatial geometric parameters of the lamp post, wherein the spatial geometric parameters of the lamp post comprise a starting point, an ending point and a radius of a lamp post cylinder.

13. The method according to claim 12, wherein determining, according to the plurality of lamp post semantic data points, the spatial geometric parameters of the lamp post comprises:
calculating a feature vector of the plurality of lamp post semantic data points as an axis vector of the lamp post cylinder;
calculating a predicted center point of the plurality of lamp post semantic data points as a center point of the lamp post cylinder;
calculating a fifth spatial equation passing through the center point of the lamp post cylinder;
calculating, according to a distance from the plurality of lamp post semantic data points to the fifth spatial equation, the radius of the lamp post cylinder;
defining a plurality of centripetal vectors of the plurality of lamp post semantic data points to the center point of the lamp post cylinder; and
calculating, according to the plurality of centripetal vectors, the starting point and the ending point of the lamp post cylinder.

14. A computer device, comprising a memory, a processor, and a computer program stored on the memory and executable on the processor, wherein the processor, when executing the computer program, implements the method according to any one of claims 1-13.

15. A computer-readable storage medium, having a computer program stored thereon, wherein the program, when executed by a processor, causes the computer device to implement the method according to any one of claims 1-13.
